# EUROPEAN PATENT SPECIFICATION

(11) **EP 4 547 950 B1**
(45) Date of publication and mention of the grant of the patent: **26.08.2026**
(21) Application number: 22743900.7
(22) Date of filing: 30.06.2022
(51) Int. Cl.: F01P 7/04, F01P 3/20

(54) **METHOD AND SYSTEM OF CONTROLLING VEHICLE FAN SPEED TO REGULATE COOLANT TEMPERATURE**
VERFAHREN UND SYSTEM ZUR STEUERUNG DER LÜFTERGESCHWINDIGKEIT EINES FAHRZEUGS ZUR REGELUNG DER KÜHLMITTELTEMPERATUR
PROCÉDÉ ET SYSTÈME DE COMMANDE DE VITESSE DE VENTILATEUR DE VÉHICULE POUR RÉGULER LA TEMPÉRATURE DE LIQUIDE DE REFROIDISSEMENT

(43) Date of publication of application: 07.05.2025
(73) Proprietor: VOLVO TRUCK CORPORATION, 405 08 Göteborg (SE)
(72) Inventor: ROSSO, Tiago Alexandre, 81280-440 Paraná (BR); HOFFMANN, João Eduardo, 84130-000 Paraná (BR); MAURO DIAS SANTOS, Max, 84015-000 Paraná (BR); AVILA, Henrique Teixeira, 82410-020 Paraná (BR)
(74) Representative: Zacco Sweden AB
(86) International application number: PCT/IB2022/056110
(87) International publication number: WO 2024/003600

(56) References cited:
- EP-A1- 2 322 777
- EP-A1- 2 322 778
- EP-A1- 4 015 792
- US-A1- 2022 077 810

## Description

### TECHNICAL FIELD

The present disclosure refers to a method, a system and a computer program product of controlling vehicle fan speed of a vehicle fan hardware of a vehicle to regulate coolant temperature of vehicle coolant of the vehicle.

### BACKGROUND

As the source of power for vehicles, vehicle engines get extremely hot. Without proper protection, a vehicle engine may wear down and even melt. A significant amount of vehicle engine failures may be related in some way to vehicle engine cooling problems. To protect vehicle engines and to keep vehicle engines running at the ideal temperature, vehicle engine coolant is used. Vehicle engine coolant protects vehicle engines from overheating. When vehicle engines are running, vehicle engine coolant continuously circulates through vehicle engines. Vehicle engine coolant transfers heat so vehicle engines may stay running in optimal condition. Vehicle engine coolant is usually used in conjunction with a fan cooling system. A cooling fan is a vital part of a vehicle's cooling system. When vehicle engine coolant is too hot, a vehicle cooling fan may be switched on and activated to provide enough cooling air flow as well as increasing the amount of cooling air, thereby decreasing the temperature of vehicle engine coolant. Currently, PID (proportional-integral-derivative) controllers are widely used in vehicle fan control systems for determining fan speed to regulate the coolant temperature. However, there may be some disturbances during the PID control process of fan speed which may lead to poor regulation of the coolant temperature.
EP4015792A1 discloses a method in a control unit for controlling the operation of a cooling arrangement in a heavy-duty electric or hybrid electric vehicle, the method comprising: obtaining a predicted cooling requirement of the vehicle for a future time; calculating an operational parameter of the cooling arrangement such that the generated cooling effect when using the operational parameter meets the predicted cooling requirement; and applying the calculated operational parameter to control the cooling arrangement, wherein obtaining the predicted cooling requirement for the future time may comprise obtaining information about a speed of the vehicle at the future time and using a heat estimation model to estimate the amount of heat generated at the future time based on the speed of the vehicle, and wherein obtaining the predicted cooling requirement for the future time may comprise obtaining information about a characteristic of the path of the vehicle at the future time and using the heat estimation model to estimate the amount of heat generated at the future time based on the characteristic of the path of the vehicle.

### SUMMARY

According to some embodiments of inventive concepts, a method of controlling vehicle fan speed to regulate coolant temperature is provided. The method may include performing a present fan speed demand generation iteration and performing a present fan speed demand selection and control signal generation iteration. Performing the present fan speed demand generation iteration may include acquiring previous coolant temperature data and previous thermal impact data, generating predicted coolant temperature data and predicted thermal impact data based on the previous coolant temperature data and the previous thermal impact data, and generating a currently predicted fan speed demand for a vehicle fan hardware based on the predicted coolant temperature data, the predicted thermal impact data and previously imposed fan speed demands for the vehicle fan hardware from a previous fan speed demand generation iteration or an initial fan speed demand for the vehicle fan hardware. Performing the present fan speed demand selection and control signal generation iteration may include receiving a real-time fan speed demand for the vehicle fan hardware, comparing the currently predicted fan speed demand with the real-time fan speed demand, determining a highest fan speed demand for the vehicle fan hardware among the currently predicted fan speed demand and the real-time fan speed demand, and generating a control signal for controlling vehicle fan speed of the vehicle fan hardware based on the highest fan speed demand.

According to some embodiments of inventive concepts, a system of controlling vehicle fan speed to regulate coolant temperature is provided. The system may include a processor and a sensor electrically coupled with the processor. The processor may be configured to perform operations which may include performing a present fan speed demand generation iteration and performing a present fan speed demand selection and control signal generation iteration. Performing the present fan speed demand generation iteration may include acquiring previous coolant temperature data and previous thermal impact data via the sensor, generating predicted coolant temperature data and predicted thermal impact data based on the previous coolant temperature data and the previous thermal impact data, and generating a currently predicted fan speed demand for a vehicle fan hardware based on the predicted coolant temperature data, the predicted thermal impact data and previously imposed fan speed demands for the vehicle fan hardware from a previous fan speed demand generation iteration or an initial fan speed demand for the vehicle fan hardware. Performing the present fan speed demand selection and control signal generation iteration may include receiving a real-time fan speed demand for the vehicle fan hardware, comparing the currently predicted fan speed demand with the real-time fan speed demand, determining a highest fan speed demand for the vehicle fan hardware among the currently predicted fan speed demand and the real-time fan speed demand, and generating a control signal for controlling vehicle fan speed of the vehicle fan hardware based on the highest fan speed demand.

According to some embodiments of inventive concepts, a computer program product of controlling vehicle fan speed to regulate coolant temperature is provided. The computer program product may include a non-transitory computer readable medium and a program code. The program code may be stored in the non-transitory computer readable medium that when executed by a system causes the system to perform operations which may include performing a present fan speed demand generation iteration and performing a present fan speed demand selection and control signal generation iteration. Performing the present fan speed demand generation iteration may include acquiring previous coolant temperature data and previous thermal impact data, generating predicted coolant temperature data and predicted thermal impact data based on the previous coolant temperature data and the previous thermal impact data, and generating a currently predicted fan speed demand for a vehicle fan hardware based on the predicted coolant temperature data, the predicted thermal impact data and previously imposed fan speed demands for the vehicle fan hardware from a previous fan speed demand generation iteration or an initial fan speed demand for the vehicle fan hardware. Performing the present fan speed demand selection and control signal generation iteration may include receiving a real-time fan speed demand for the vehicle fan hardware, comparing the currently predicted fan speed demand with the real-time fan speed demand, determining a highest fan speed demand for the vehicle fan hardware among the currently predicted fan speed demand and the real-time fan speed demand, and generating a control signal for controlling vehicle fan speed of the vehicle fan hardware based on the highest fan speed demand.

According to some embodiments of inventive concepts, a method of controlling vehicle fan speed to regulate coolant temperature is provided. The method, as a discrete fan speed controller, may include iteratively performing a coolant temperature and thermal impact data generation process, a fan speed demand generation process, a real-time comparative process between generated fan speed demands and requested fan speed demands and a control signal generation process. Performing an iteration of the coolant temperature and thermal impact data generation process may include acquiring previous coolant temperature data and previous thermal impact data, generating predicted coolant temperature data and predicted thermal impact data. Performing the fan speed demand generation process, as a subsequent process to the coolant temperature and thermal impact data generation process, results in the generation of predicted fan speed demands from previously predicted coolant temperature and thermal impact data, and previously imposed fan speed demands for the vehicle fan hardware. The real-time comparative process between generated fan speed demands and requested fan speed demands may be performed as an iteration subsequent to the fan speed demand generation process or parallel to the coolant temperature, thermal impact and fan speed demand data generation processes after the first iteration of each process, and it may include the reception of predicted fan speed demands in real-time and fan speed demands from real-time vehicle cooling demand requests, comparing the fan speed demand values and determining the highest fan speed demand. The control signal generation process iteration may be performed as subsequent to the real-time comparative process and generates the control signal required by the fan hardware in achieving the imposed fan speed demands.

According to some embodiments of inventive concepts, a system of controlling vehicle fan speed to regulate coolant temperature is provided. The system may include a processor and a sensor electrically coupled with the processor. The processor may be configured to perform operations which may include performing the coolant temperature and thermal impact data generation, fan speed demand generation, real-time comparison between fan speed demands and control signal generation. Performing an iteration of the coolant temperature and thermal impact data generation process may include acquiring previous coolant temperature data and previous thermal impact data, generating predicted coolant temperature data and predicted thermal impact data. Performing the fan speed demand generation process, as a subsequent process to the coolant temperature and thermal impact data generation process, results in the generation of predicted fan speed demands from previously predicted coolant temperature and thermal impact data, and previously imposed fan speed demands for the vehicle fan hardware. The real-time comparative process between generated fan speed demands and requested fan speed demands may be performed as an iteration subsequent to the fan speed demand generation process or parallel to the coolant temperature, thermal impact and fan speed demand data generation processes after the first iteration of each process, and it may include the reception of predicted fan speed demands in real-time and fan speed demands from real-time vehicle cooling demand requests, comparing the fan speed demand values and determining the highest fan speed demand. The control signal generation process iteration may be performed as subsequent to the real-time comparative process and generates the control signal required by the fan hardware in achieving the imposed fan speed demands.

According to some embodiments of inventive concepts, a computer program product of controlling vehicle fan speed to regulate coolant temperature is provided. The computer program product may include a non-transitory computer readable medium and a program code. The program code may be stored in the non-transitory computer readable medium that when executed by a system causes the system to perform operations which may include performing the coolant temperature and thermal impact data generation, fan speed demand generation, real-time comparison between fan speed demands and control signal generation. Performing an iteration of the coolant temperature and thermal impact data generation process may include acquiring previous coolant temperature data and previous thermal impact data, generating predicted coolant temperature data and predicted thermal impact data. Performing the fan speed demand generation process, as a subsequent process to the coolant temperature and thermal impact data generation process, results in the generation of predicted fan speed demands from previously predicted coolant temperature and thermal impact data, and previously imposed fan speed demands for the vehicle fan hardware. The real-time comparative process between generated fan speed demands and requested fan speed demands may be performed as an iteration subsequent to the fan speed demand generation process or parallel to the coolant temperature, thermal impact and fan speed demand data generation processes after the first iteration of each process, and it may include the reception of predicted fan speed demands in real-time and fan speed demands from real-time vehicle cooling demand requests, comparing the fan speed demand values and determining the highest fan speed demand. The control signal generation process iteration may be performed as subsequent to the real-time comparative process and generates the control signal required by the fan hardware in achieving the imposed fan speed demands.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
**Figure 1** is a flowchart diagram illustrating operations of a method of controlling vehicle fan speed to regulate coolant temperature according to some embodiments of inventive concepts;
**Figure 2** is a flowchart diagram illustrating operations of a method of controlling vehicle fan speed to regulate coolant temperature according to some embodiments of inventive concepts;
**Figure 3** is a flowchart diagram illustrating operations of a method of controlling vehicle fan speed to regulate coolant temperature according to some embodiments of inventive concepts;
**Figure 4** is a flowchart diagram illustrating operations of a method of controlling vehicle fan speed to regulate coolant temperature according to some embodiments of inventive concepts;
**Figure 5** is a flowchart diagram illustrating operations of a method of controlling vehicle fan speed to regulate coolant temperature according to some embodiments of inventive concepts;
**Figure 6** is a flowchart diagram illustrating operations of a method of controlling vehicle fan speed to regulate coolant temperature according to some embodiments of inventive concepts;
**Figure 7** is a flowchart diagram illustrating operations of a method of controlling vehicle fan speed to regulate coolant temperature according to some embodiments of inventive concepts;
**Figure 8** is a flowchart diagram illustrating operations of a method of controlling vehicle fan speed to regulate coolant temperature according to some embodiments of inventive concepts;
**Figure 9** is a flowchart diagram illustrating operations of a method of controlling vehicle fan speed to regulate coolant temperature according to some embodiments of inventive concepts;
**Figure 10** is a schematic diagram illustrating a reinforcement learning labeling method for the machine learning training of controlling vehicle fan speed to regulate coolant temperature according to some embodiments of inventive concepts;
**Figure 11** is a flowchart diagram illustrating operations of a method of controlling vehicle fan speed to regulate coolant temperature according to some embodiments of inventive concepts;
**Figure 12** is a flowchart diagram illustrating operations of a method of controlling vehicle fan speed to regulate coolant temperature according to some embodiments of inventive concepts;
**Figure 13** is a schematic diagram illustrating sequential and temporal information of a method of controlling vehicle fan speed to regulate coolant temperature according to some embodiments of inventive concepts;
**Figure 14** is a schematic diagram illustrating sequential and temporal information of a method of controlling vehicle fan speed to regulate coolant temperature according to some embodiments of inventive concepts;
**Figure 15** is a flowchart diagram illustrating operations of a method of controlling vehicle fan speed to regulate coolant temperature according to some embodiments of inventive concepts;
**Figure 16** is a schematic diagram illustrating sequential and temporal information of a method of controlling vehicle fan speed to regulate coolant temperature according to some embodiments of inventive concepts;
**Figure 17** is a schematic diagram illustrating components of a system of controlling vehicle fan speed to regulate coolant temperature according to some embodiments of inventive concepts; and
**Figure 18** is a schematic diagram illustrating a computer program product of controlling vehicle fan speed to regulate coolant temperature according to some embodiments of inventive concepts.

### DETAILED DESCRIPTION

Certain details of the described embodiments may be modified, omitted, or expanded upon without departing from the scope of the invention as defined in the appended claims.

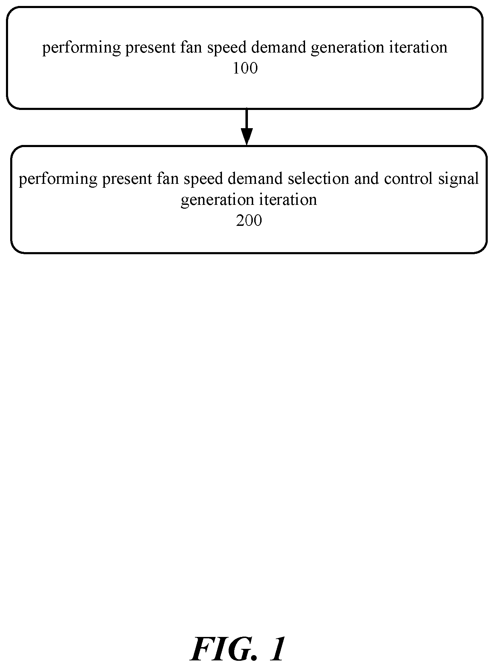

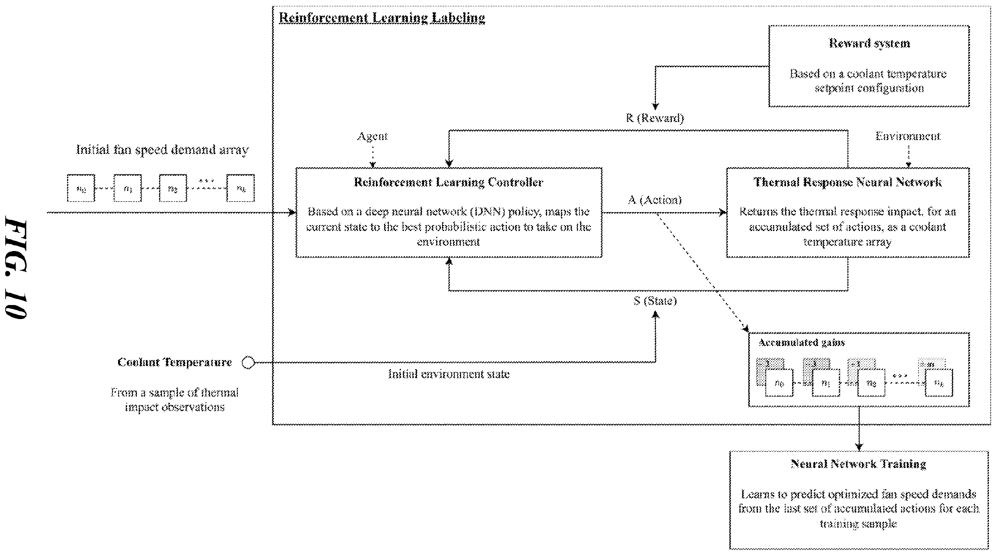

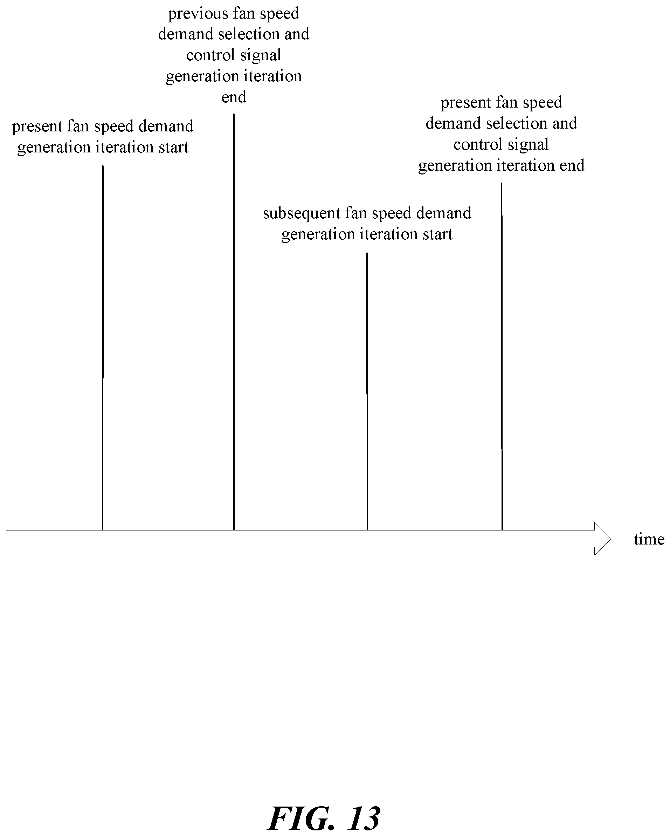

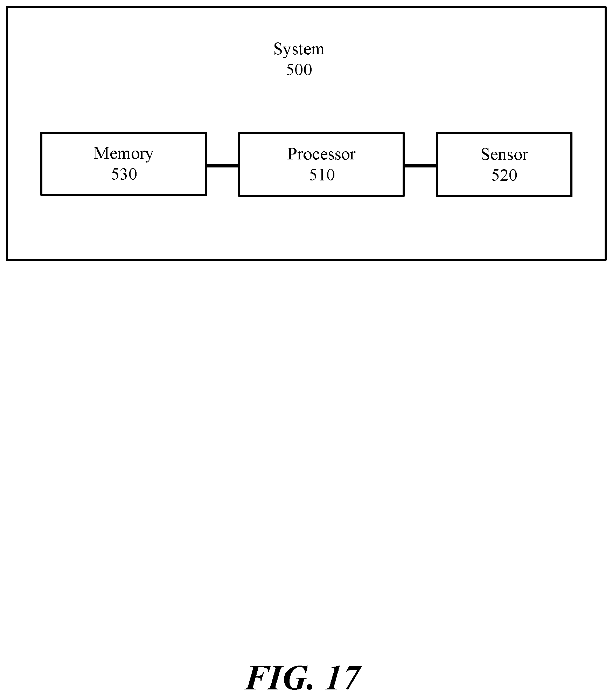

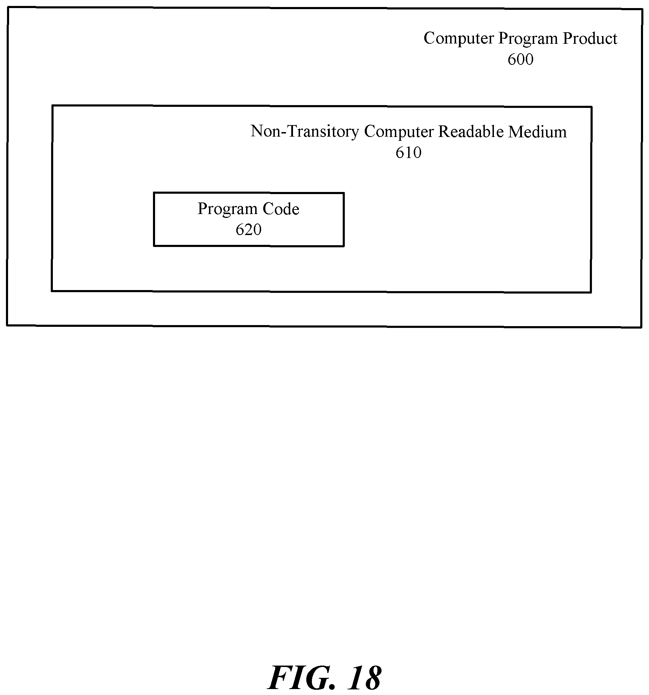

**Figures 1-9****, 11-12 and 15** are flowchart diagrams illustrating operations of a method of controlling vehicle fan speed to regulate coolant temperature according to some embodiments of inventive concepts. **Figure 10** is a schematic diagram illustrating a reinforcement learning labeling method of generating optimized fan speed demands for a coolant temperature setpoint configuration. The generated fan speed demand labels may be used to train a machine learning model for the generation of fan speed demands in regulating the coolant temperature according to some embodiments of inventive concepts. **Figures 13-14** **and 16** are schematic diagrams illustrating sequential and temporal information of a method of controlling vehicle fan speed to regulate coolant temperature according to some embodiments of inventive concepts. **Figure 17** is a schematic diagram illustrating components of a system of controlling vehicle fan speed to regulate coolant temperature according to some embodiments of inventive concepts. **Figure 18** is a schematic diagram illustrating components of a computer program product of controlling vehicle fan speed to regulate coolant temperature according to some embodiments of inventive concepts. Like numbers in the figures refer to like operations and like components.

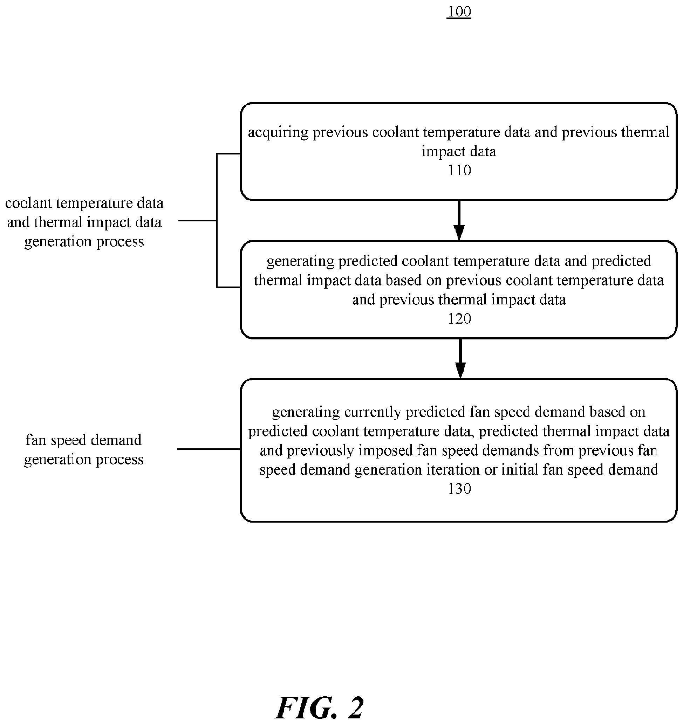

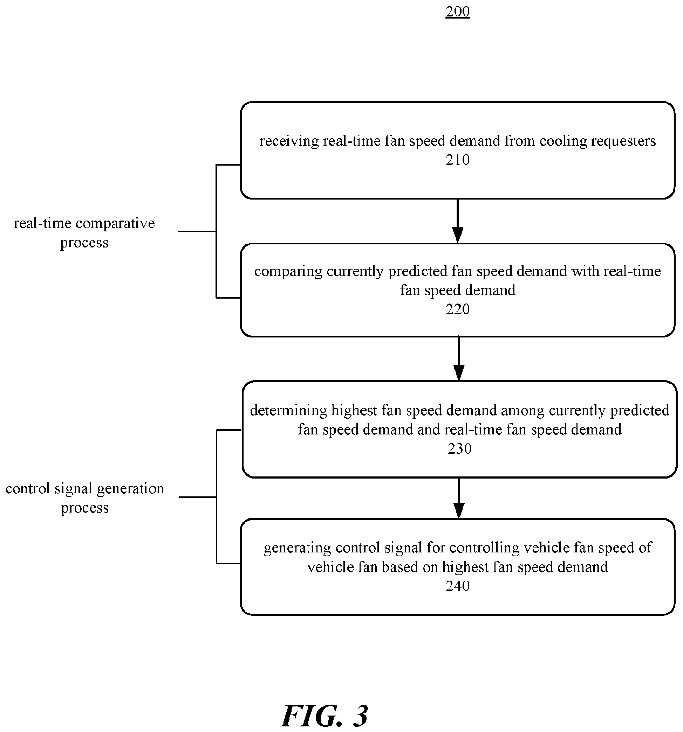

Referring now to **Figure 1****,** a method of controlling vehicle fan speed of a vehicle fan hardware of a vehicle to regulate coolant temperature of vehicle coolant of the vehicle is provided. In the method, a present fan speed demand selection and control signal generation iteration may be performed (block 200), as shown in **Figure 3****,** in response to that a present fan speed demand generation iteration may be performed (block 100), as shown in **Figure 2****.** The method may improve the vehicle's performance, fuel efficiency and emissions.

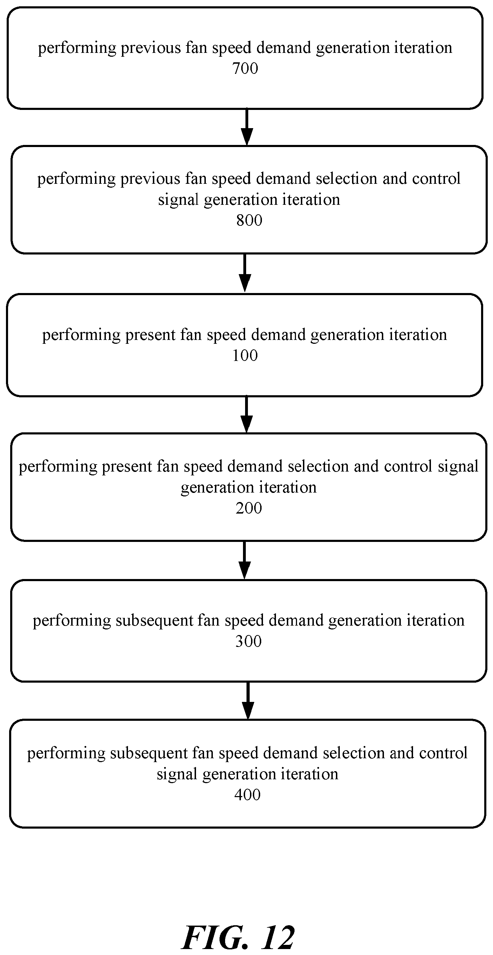

According to some embodiments, reference now is made to **Figure 2****.** During the present fan speed demand generation iteration, previous coolant temperature data and previous thermal impact data which may be associated with the previous coolant temperature data may be acquired (block 110). Then, during the present fan speed demand generation iteration, predicted coolant temperature data and predicted thermal impact data may be generated based on the previous coolant temperature data and the previous thermal impact data (block 120); the predicted thermal impact data may be associated with the predicted coolant temperature data. This may be referred as a coolant temperature data and thermal impact data generation process. During the present fan speed demand generation iteration, thereafter, a currently predicted fan speed demand for a vehicle fan hardware may be generated based on the predicted coolant temperature data, the predicted thermal impact data and previously imposed fan speed demands for the vehicle fan hardware from a previous fan speed demand generation iteration (block 700, as shown in **Figure 12****)** (for instance, a plurality of closest fan speed demands, so that there may be an accuracy improvement in predicting values, and additionally it may support a machine learning model's knowledge of possible limitations for a defined discrete sampling time) or an initial fan speed demand for the vehicle fan hardware (block 130). This may simply be referred as a fan speed demand generation process.

As can be seen in **Figure 3****,** according to some embodiments, during the present fan speed demand selection and control signal generation iteration, a real-time fan speed demand for the vehicle fan hardware may be received (block 210), for instance, from cooling requesters; therefore, the currently predicted fan speed demand may be compared with the real-time fan speed demand (block 220). This may be referred as a real-time comparative process. Next, during the present fan speed demand selection and control signal generation iteration, a highest fan speed demand for the vehicle fan hardware among the currently predicted fan speed demand and the real-time fan speed demand may be determined (block 230), such that the optimized fan speed demand may be generated; thus, a control signal for controlling vehicle fan speed of the vehicle fan hardware may be generated based on the highest fan speed demand (block 240), such that the coolant temperature of the vehicle coolant of the vehicle may be regulated to be maintained in a range of configurable temperature set points, and the cooling performance of the vehicle may accordingly be optimized. This may be referred as a control signal generation process.

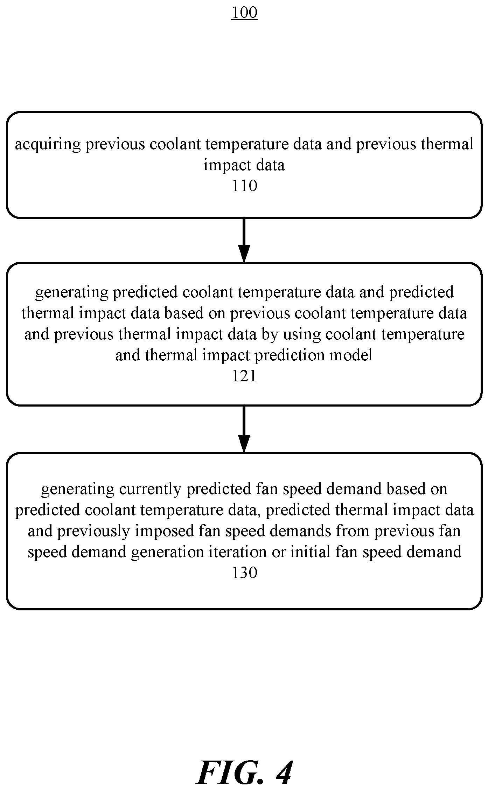

According to some embodiments, as can be seen in **Figure 4****,** during the present fan speed demand selection and control signal generation iteration, the predicted coolant temperature data and the predicted thermal impact data may be generated based on the previous coolant temperature data and the previous thermal impact data by using a coolant temperature and thermal impact prediction model (block 121).

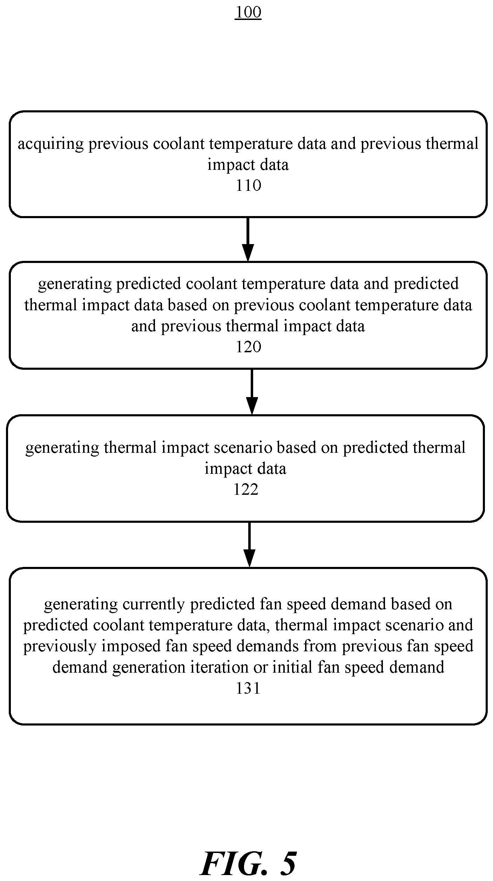

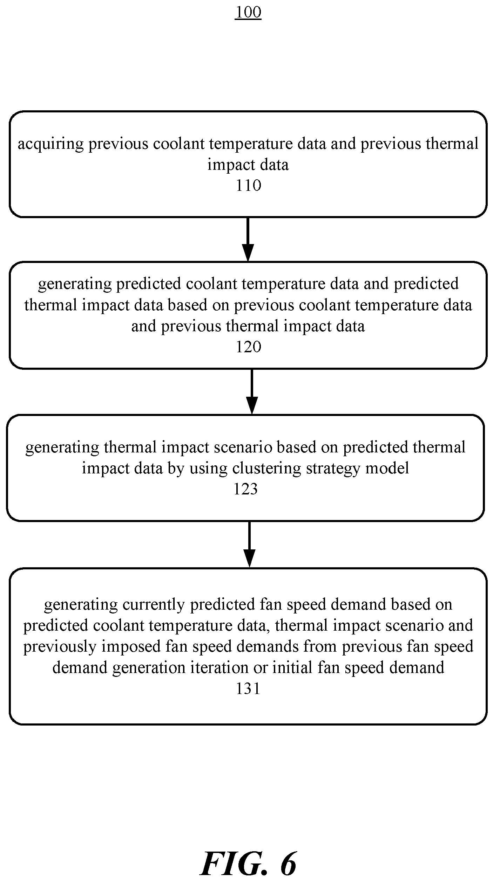

According to some embodiments, as can be seen in **Figure 5****,** during the present fan speed demand generation iteration, after the predicted coolant temperature data and the predicted thermal impact data may be generated (block 120), a thermal impact scenario, as selected and/or extracted features that improve the capture of relevant patterns by subsequential thermal impact receiver models while preserving the temporal aspect of the original variables, may be generated based on the predicted thermal impact data (block 122); the currently predicted fan speed demand may therefore be generated based on the predicted coolant temperature data, the thermal impact scenario and the previously imposed fan speed demands or the initial fan speed demand (block 131), defined according to the vehicle dynamics and fan speed states before the first control iteration; furthermore, according to some embodiments, as can be seen in **Figure 6****,** the thermal impact scenario may be generated based on the predicted thermal impact data by using a clustering strategy model (block 123).

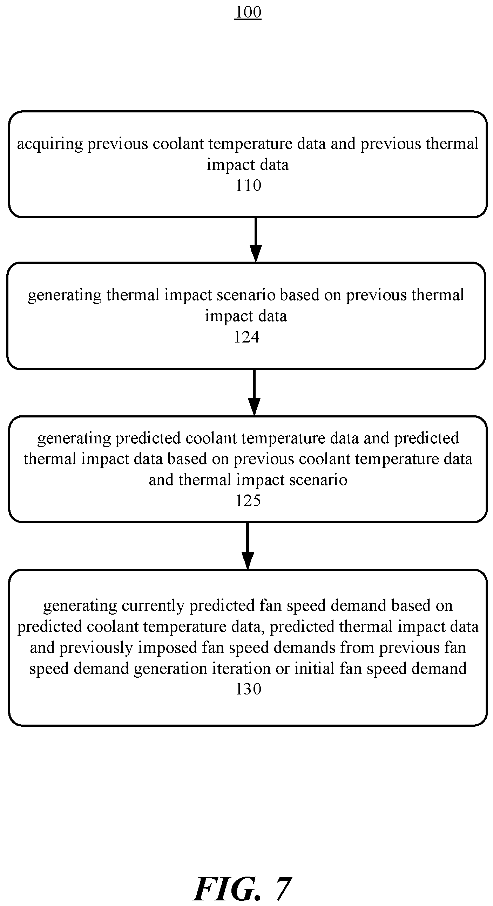

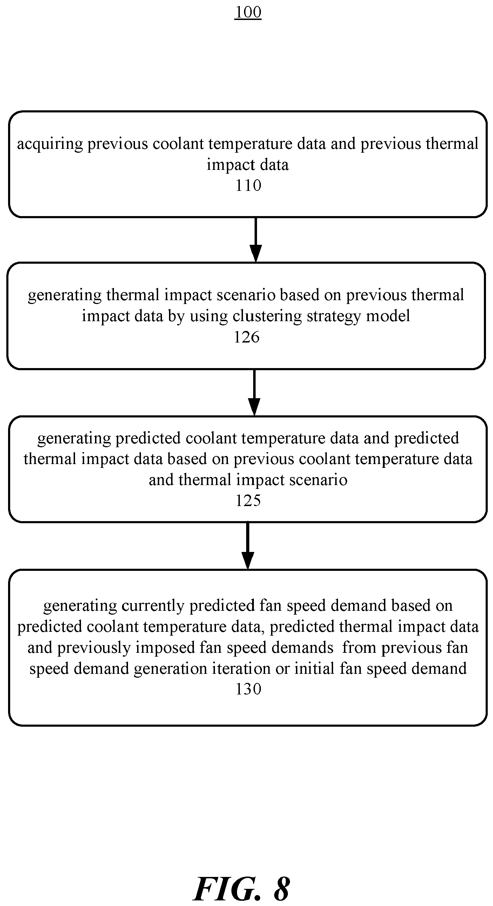

Reference now is made to **Figure 7****.** During the present fan speed demand generation iteration, according to some embodiments, after the previous coolant temperature data and the previous thermal impact data may be acquired (block 110), a thermal impact scenario may be generated based on the previous thermal impact data (block 124), and the predicted coolant temperature data and the predicted thermal impact data may thus be generated based on the previous coolant temperature data and the thermal impact scenario (block 125); furthermore, according to some embodiments, as can be seen in **Figure 8****,** the thermal impact scenario may be generated based on the previous thermal impact data by using a clustering strategy model (block 126).

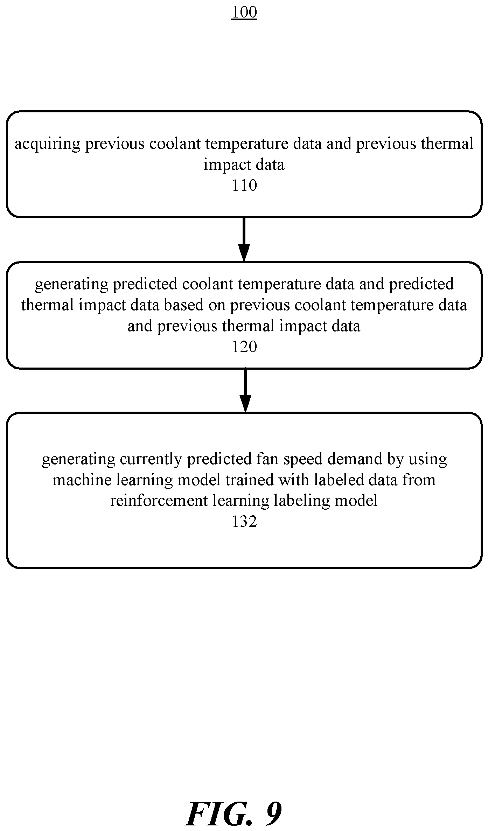

The currently predicted fan speed demand may be generated by using a reinforcement learning labeling model (block 132) during the present fan speed demand generation iteration, according to some embodiments, as can be seen in **Figure 9****.** For example, the currently predicted fan speed demand may be generated by using a machine learning model trained with labeled data from a reinforcement learning labeling model. **Figure 10** shows an example of a reinforcement learning labeling model for the training of a machine learning model. The reinforcement learning (RL) labeling strategy is used to generate fan speed demands as labels in optimizing the regulation of coolant temperature to a configurable setpoint, in the case of a trainable controller or control model. A better understanding of the reinforcement learning model can be achieved in the diagram in **Figure 10** and in the following description. As in the diagram, an accurate coolant temperature prediction model for a given vehicle, as a thermal response neural network, is an RL environment, which receives a range of previous thermal impact variables and outputs a thermal response state as a coolant temperature discrete space (array). At each RL labeling iteration an RL agent (controller) maps the current thermal response state to the best probabilistic action to take on the environment. These actions can be expressed as accumulated gains over a base fan speed discrete space (array) that iteratively and/or episodically reinforce the probabilistic strategy of the agent, decreasing the number of iterations until a desirable error from a defined coolant temperature setpoint, optimized over a base controller performance such as the PID (Proportional-Integral-Derivative), is achieved for a defined number of data frames, intending the training of machine learning controller models with RL labeled data. In other words, there may be four major steps of the Reinforcement Learning Labeling Model Training: 1) acquiring thermal impact environments; 2) performing the reinforcement learning labeling process; 3) storing thermal impact environments with labeled and optimized fan speed discrete spaces; 4) training a machine learning fan speed demand generation model. There may be an Reinforcement Learning Labeling Model Episode as follows: 1) acquiring thermal impact environment variables; 2) predicting the initial coolant temperature discrete space from a coolant temperature prediction model with current thermal impact environment inputs; 3) generating a discrete gain for the current fan speed demand discrete space from a reinforcement learning agent inference, accumulating over previous discrete space gains; 4) predicting the current coolant temperature discrete space from a coolant temperature prediction model with the current fan speed discrete space; 5) repeating steps 3 to 4 for a defined number of iterations in applying an optimal number of accumulated gains in the fan speed demand discrete space, additionally reinforcing the reinforcement learning agent probabilistic strategy to improve its action quality and labeling speed if an iterative update of the agent probabilistic strategy is adopted; 6) reinforcing the reinforcement learning agent probabilistic strategy to improve its action quality and labeling speed if an episodic update of the agent probabilistic strategy is adopted; 7) storing labeled and optimized fan speed demands for one thermal impact environment.

According to some embodiments, as can be seen in **Figure 13****,** the present fan speed demand generation iteration may start before a previous fan speed demand selection and control signal generation iteration (block 800) (as shown in **Figure 12****)** ends, so as to maintain a continuous flow of predicted fan speed demands based in known fan speed generation and control delays. For example, a first fan speed demand selection and control signal generation iteration may be performed in response to that a first fan speed demand generation iteration may be performed, while a second fan speed demand selection and control signal generation iteration may be performed in response to that a second fan speed demand generation iteration may be performed; when the present fan speed demand generation iteration may be the second fan speed demand generation iteration, the second fan speed demand generation iteration may start before the first fan speed demand selection and control signal generation iteration ends.

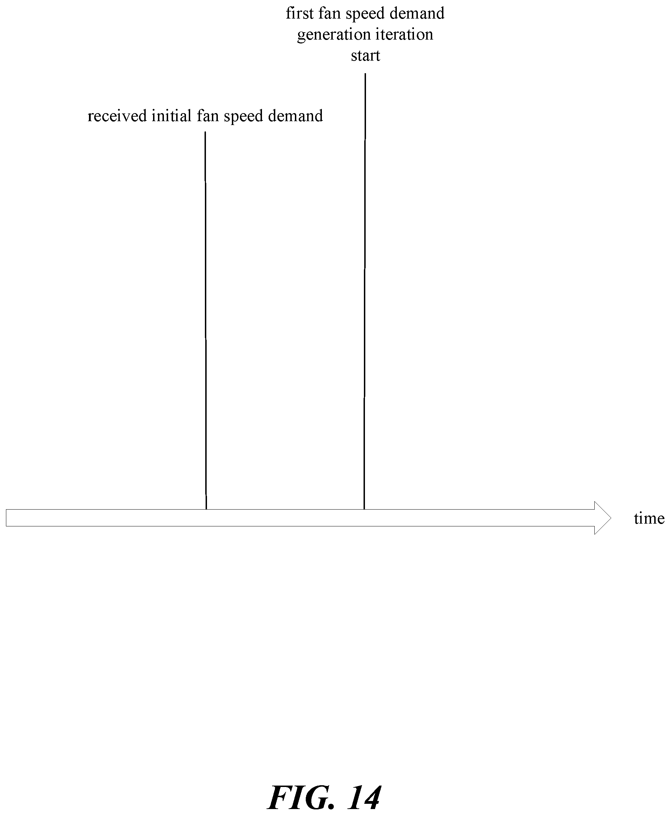

On the other hand, according to some embodiments, as can be seen in **Figure 14****,** the present fan speed demand generation iteration may start when (i.e., parallel to) or after an initial fan speed demand is received, for example, when the present fan speed demand generation iteration may be the very first fan speed demand generation iteration.

According to some embodiments, in an aspect, the present coolant temperature data and thermal impact data generation process may start before a previous present fan speed demand generation process may end, and a subsequent coolant temperature data and thermal impact data generation process may start before the present fan speed demand generation process may end.

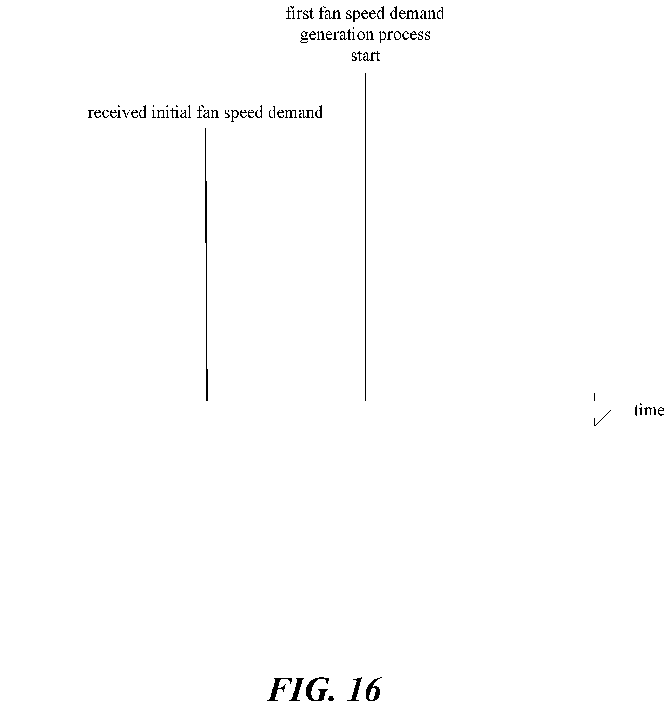

According to some embodiments, in an aspect, as can be seen in **Figure 16****,** the present fan speed demand generation process may start when or after the initial fan speed demand may be received.

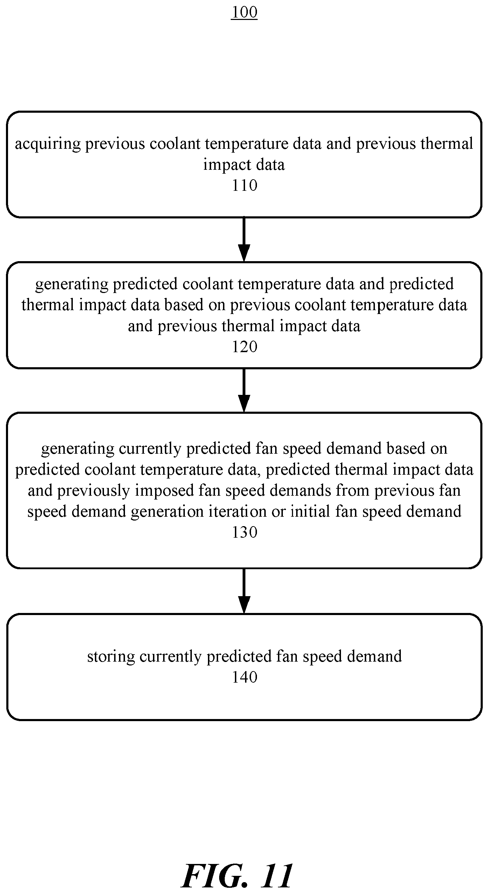

After the currently predicted fan speed demand may be generated, during the present fan speed demand generation iteration (block 130), according to some embodiments, the currently predicted fan speed demand may be stored (block 140), as can be seen in **Figure 11****.**

As the currently predicted fan speed demand may be stored during the present fan speed demand generation iteration, according to some embodiments, as can be seen in **Figure 12****,** a subsequent fan speed demand generation iteration may be performed (block 300) in response to that the present fan speed demand selection and control signal generation iteration may be performed (block 200), and a subsequent fan speed demand selection and control signal generation iteration may be performed (block 400) in response to that the subsequent fan speed demand generation iteration may be performed (block 300). Operations of performing (300) the subsequent fan speed demand generation iteration may be similar to operations of performing (100) the present fan speed demand generation iteration, while of performing (400) the subsequent fan speed demand selection and control signal generation iteration may be similar to operations of performing (200) the present fan speed demand selection and control signal generation iteration.

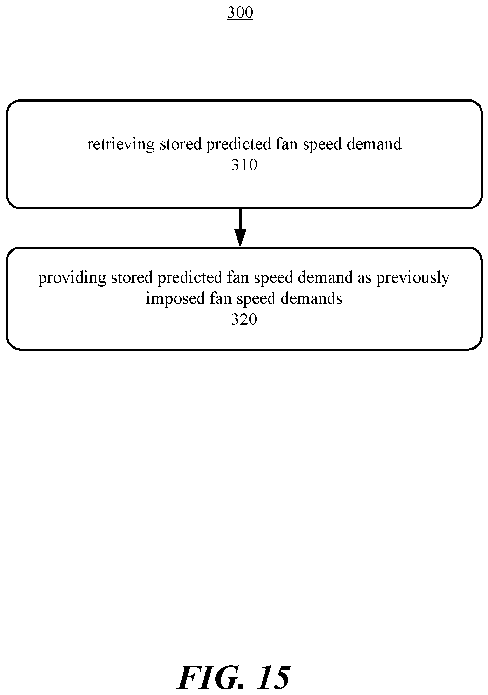

Furthermore, according to some embodiments, as can be seen in **Figure 15****,** during the subsequent fan speed demand generation iteration, the stored predicted fan speed demand may be retrieved (block 310), and the stored predicted fan speed demand may be provided (320) as one of the previously imposed fan speed demands from a previous fan speed demand generation iteration, i.e., a fan speed demand generation iteration just prior to the subsequent fan speed demand generation iteration.

Similarly, according to some embodiments, the subsequent fan speed demand generation iteration may start before the present fan speed demand selection and control signal generation iteration ends, as can be seen in **Figure 13****.** For example, when the subsequent fan speed demand generation iteration may be the second fan speed demand generation iteration and the present fan speed demand selection and control signal generation iteration may be the first fan speed demand selection and control signal generation iteration, the second fan speed demand generation iteration may start before the first fan speed demand selection and control signal generation iteration ends.

**Figure 17** is a schematic diagram illustrating a system 500 which is used to perform the above recited method. Specifically, the system 500 may be a system of controlling vehicle fan speed to regulate coolant temperature according to some embodiments.

As illustrated in **Figure 17****,** according to some embodiments, the system 500 may comprise a processor 510, a sensor 520 and a memory 530. The sensor 520 may be electrically coupled with the processor 510, and the memory 530 may also be electrically coupled with the processor 510. The processor 510 may be configured to perform the above recited operations of fan speed demand generation iteration(s) and fan speed demand selection and control signal generation iteration(s). For example, the processor 510 may acquire the previous coolant temperature data and the previous thermal impact data via the sensor 520, and may store the currently predicted fan speed demand in the memory 530.

**Figure 18** is a schematic diagram illustrating a computer program product 600 which is used to perform the above recited method. Specifically, the computer program product 600 may be used to control vehicle fan speed to regulate coolant temperature according to some embodiments.

As illustrated in **Figure 18****,** according to some embodiments, the computer program product 600 may comprise a non-transitory computer readable medium 610 and a program code 620. The program code 620 may be stored in the non-transitory computer readable medium 610 that when executed by the above recited system 500 causes the system 500 to perform the above recited method.

## Claims

1. A method of controlling vehicle fan speed to regulate coolant temperature, the method comprising:
performing (100) a present fan speed demand generation iteration comprising:
acquiring (110) previous coolant temperature data and previous thermal impact data, wherein the previous thermal impact data is associated with the previous coolant temperature data;
generating (120) predicted coolant temperature data and predicted thermal impact data based on the previous coolant temperature data and the previous thermal impact data, wherein the predicted thermal impact data is associated with the predicted coolant temperature data; and
generating (130) a currently predicted fan speed demand for a vehicle fan hardware based on the predicted coolant temperature data, the predicted thermal impact data and previously imposed fan speed demands for the vehicle fan hardware from a previous fan speed demand generation iteration or an initial fan speed demand for the vehicle fan hardware; and
in response to performing (100) the present fan speed demand generation iteration, performing (200) a present fan speed demand selection and control signal generation iteration comprising:
receiving (210) a real-time fan speed demand for the vehicle fan hardware;
comparing (220) the currently predicted fan speed demand with the real-time fan speed demand;
determining (230) a highest fan speed demand for the vehicle fan hardware among the currently predicted fan speed demand and the real-time fan speed demand; and
generating (240) a control signal for controlling vehicle fan speed of the vehicle fan hardware based on the highest fan speed demand.

2. The method of Claim 1, wherein
performing (100) the present fan speed demand generation iteration further comprising:
generating (121) the predicted coolant temperature data and the predicted thermal impact data by using a coolant temperature and thermal impact prediction model.

3. The method of Claim 1, wherein
performing (100) the present fan speed demand generation iteration further comprising:
generating (122) a thermal impact scenario based on the predicted thermal impact data; and
generating (131) the currently predicted fan speed demand based on the predicted coolant temperature data, the thermal impact scenario and the previously imposed fan speed demands or the initial fan speed demand.

4. The method of Claim 3, wherein
performing (100) the present fan speed demand generation iteration further comprising:
generating (123) the thermal impact scenario by using a clustering strategy model.

5. The method of Claim 1, wherein
performing (100) the present fan speed demand generation iteration further comprising:
generating (124) a thermal impact scenario based on the previous thermal impact data; and
generating (125) the predicted coolant temperature data and the predicted thermal impact data based on the previous coolant temperature data and the thermal impact scenario.

6. The method of Claim 5, wherein
performing (100) the present fan speed demand generation iteration further comprising:
generating (126) the thermal impact scenario by using a clustering strategy model.

7. The method of Claim 1, wherein
performing (100) the present fan speed demand generation iteration further comprising:
generating (132) the currently predicted fan speed demand by using a reinforcement learning labeling model.

8. The method of Claim 1, wherein
the present fan speed demand generation iteration starts before a previous fan speed demand selection and control signal generation iteration ends.

9. The method of Claim 1, wherein
the present fan speed demand generation iteration starts when or after the initial fan speed demand is received.

10. The method of Claim 1, wherein
performing (100) the present fan speed demand generation iteration further comprising:
storing (140) the currently predicted fan speed demand.

11. The method of Claim 10 further comprising:
in response to performing (200) the present fan speed demand selection and control signal generation iteration, performing (300) a subsequent fan speed demand generation iteration comprising:
retrieving (310) the stored predicted fan speed demand; and
providing (320) the stored predicted fan speed demand as one of the previously imposed fan speed demands.

12. The method of Claim 11, wherein
the subsequent fan speed demand generation iteration starts before the present fan speed demand selection and control signal generation iteration ends.

13. The method of Claim 11 further comprising:
in response to performing (300) the subsequent fan speed demand generation iteration, performing (400) a subsequent fan speed demand selection and control signal generation iteration.

14. The method of Claim 1, wherein
acquiring (110) the previous coolant temperature data and the previous thermal impact data, and generating (120) the predicted coolant temperature data and the predicted thermal impact data in the present fan speed demand generation iteration are referred as a present coolant temperature data and thermal impact data generation process,
generating (130) the currently predicted fan speed demand in the present fan speed demand generation iteration is referred as a present fan speed demand generation process,
receiving (210) the real-time fan speed demand, and comparing (220) the currently predicted fan speed demand with the real-time fan speed demand in the present fan speed demand selection and control signal generation iteration are referred as a present real-time comparative process, and
determining (230) the highest fan speed demand, and generating (240) the control signal in the present fan speed demand selection and control signal generation iteration are referred as a present control signal generation process.

15. A system (500) of controlling vehicle fan speed to regulate coolant temperature, the system (500) comprising:
a processor (510); and
a sensor (520) electrically coupled with the processor (510),
wherein the processor (510) is configured to perform operations comprising:
performing (100) a present fan speed demand generation iteration comprising:
acquiring (110) previous coolant temperature data and previous thermal impact data via the sensor (520), wherein the previous thermal impact data is associated with the previous coolant temperature data;
generating (120) predicted coolant temperature data and predicted thermal impact data based on the previous coolant temperature data and the previous thermal impact data, wherein the predicted thermal impact data is associated with the predicted coolant temperature data; and
generating (130) a currently predicted fan speed demand for a vehicle fan hardware based on the predicted coolant temperature data, the predicted thermal impact data and previously imposed fan speed demands for the vehicle fan hardware from a previous fan speed demand generation iteration or an initial fan speed demand for the vehicle fan hardware; and
in response to performing (100) the present fan speed demand generation iteration, performing (200) a present fan speed demand selection and control signal generation iteration comprising:
receiving (210) a real-time fan speed demand for the vehicle fan hardware;
comparing (220) the currently predicted fan speed demand with the real-time fan speed demand;
determining (230) a highest fan speed demand for the vehicle fan hardware among the currently predicted fan speed demand and the real-time fan speed demand; and
generating (240) a control signal for controlling vehicle fan speed of the vehicle fan hardware based on the highest fan speed demand.

## Patentansprüche

1. Verfahren zum Steuern der Fahrzeuglüfterdrehzahl zur Regulierung der Kühlmitteltemperatur, wobei das Verfahren umfasst:
Durchführen (100) einer vorliegenden Iteration zur Generierung eines Lüfterdrehzahlbedarfs, umfassend:
Erfassen (110) Daten zur vorherigen Kühlmitteltemperatur und Daten zum vorherigen thermischen Einfluss, wobei die vorherigen thermischen Einflussdaten den vorherigen Kühlmitteltemperaturdaten zugeordnet werden;
Generieren (120) von Daten zur vorhergesagten Kühlmitteltemperatur und von Daten zum vorhergesagten thermischen Einfluss basierend auf den Daten zur vorherigen Kühlmitteltemperatur und den Daten zum vorherigen thermischen Einfluss, wobei die Daten zum vorhergesagten thermischen Einfluss den Daten zur vorhergesagten Kühlmitteltemperatur zugeordnet werden; und
Generieren (130) eines aktuell vorhergesagten Lüfterdrehzahlbedarfs für eine Fahrzeuglüfterhardware basierend auf den Daten zur vorhergesagten Kühlmitteltemperatur, den Daten zum vorhergesagten thermischen Einfluss und zuvor auferlegten Lüfterdrehzahlbedarfswerten für die Fahrzeuglüfterhardware aus einer vorherigen Iteration zur Generierung eines Lüfterdrehzahlbedarfs oder einem initialen Lüfterdrehzahlbedarf für die Fahrzeuglüfterhardware; und
als Reaktion auf das Durchführen (100) der vorliegenden Iteration zur Generierung eines Lüfterdrehzahlbedarfs Durchführen (200) einer vorliegenden Iteration zur Auswahl eines Lüfterdrehzahlbedarfs und zur Generierung eines Steuersignals, umfassend:
Empfangen (210) eines Echtzeit-Lüfterdrehzahlbedarfs für die Fahrzeuglüfterhardware;
Vergleichen (220) des aktuell vorhergesagten Lüfterdrehzahlbedarfs mit dem Echtzeit-Lüfterdrehzahlbedarf;
Bestimmen (230) eines höchsten Lüfterdrehzahlbedarfs für die Fahrzeuglüfterhardware unter dem aktuell vorhergesagten Lüfterdrehzahlbedarf und dem Echtzeit-Lüfterdrehzahlbedarf; und
Generieren (240) eines Steuersignals zur Steuerung der Fahrzeuglüfterdrehzahl der Fahrzeuglüfterhardware basierend auf dem höchsten Lüfterdrehzahlbedarf.

2. Verfahren nach Anspruch 1, wobei
das Durchführen (100) der vorliegenden Iteration zur Generierung eines Lüfterdrehzahlbedarfs ferner umfasst:
Generieren (121) der Daten zur vorhergesagten Kühlmitteltemperatur und der Daten zum vorhergesagten thermischen Einfluss unter Verwendung eines Vorhersagemodells für Kühlmitteltemperatur und thermischen Einfluss.

3. Verfahren nach Anspruch 1, wobei
das Durchführen (100) der vorliegenden Iteration zur Generierung eines Lüfterdrehzahlbedarfs ferner umfasst:
Generieren (122) eines thermischen Einflussszenarios basierend auf den Daten zum vorhergesagten thermischen Einfluss; und
Generieren (131) des aktuell vorhergesagten Lüfterdrehzahlbedarfs basierend auf den Daten zur vorhergesagten Kühlmitteltemperatur, dem thermischen Einflussszenario und den zuvor auferlegten Lüfterdrehzahlbedarfswerten oder dem initialen Lüfterdrehzahlbedarf.

4. Verfahren nach Anspruch 3, wobei
das Durchführen (100) der vorliegenden Iteration zur Generierung eines Lüfterdrehzahlbedarfs ferner umfasst:
Generieren (123) des thermischen Einflussszenarios unter Verwendung eines Clustering-Strategie-Modells.

5. Verfahren nach Anspruch 1, wobei
das Durchführen (100) der vorliegenden Iteration zur Generierung eines Lüfterdrehzahlbedarfs ferner umfasst:
Generieren (124) eines thermischen Einflussszenarios basierend auf den Daten zum vorherigen thermischen Einfluss; und
Generieren (125) der Daten zur vorhergesagten Kühlmitteltemperatur und der Daten zum vorhergesagten thermischen Einfluss basierend auf den Daten zur vorherigen Kühlmitteltemperatur und dem thermischen Einflussszenario.

6. Verfahren nach Anspruch 5, wobei
das Durchführen (100) der vorliegenden Iteration zur Generierung eines Lüfterdrehzahlbedarfs ferner umfasst:
Generieren (126) des thermischen Einflussszenarios unter Verwendung eines Clustering-Strategie-Modells.

7. Verfahren nach Anspruch 1, wobei
das Durchführen (100) der vorliegenden Iteration zur Generierung eines Lüfterdrehzahlbedarfs ferner umfasst:
Generieren (132) des aktuell vorhergesagten Lüfterdrehzahlbedarfs unter Verwendung eines Reinforcement-Learning-Labeling-Modells.

8. Verfahren nach Anspruch 1, wobei
die vorliegende Iteration zur Generierung eines Lüfterdrehzahlbedarfs beginnt, bevor eine vorherige Iteration zur Auswahl eines Lüfterdrehzahlbedarfs und zur Generierung eines Steuersignals endet.

9. Verfahren nach Anspruch 1, wobei
die vorliegende Iteration zur Generierung eines Lüfterdrehzahlbedarfs beginnt, wenn oder nachdem der initiale Lüfterdrehzahlbedarf empfangen wird.

10. Verfahren nach Anspruch 1, wobei
das Durchführen (100) der vorliegenden Iteration zur Generierung eines Lüfterdrehzahlbedarfs ferner umfasst:
Speichern (140) des aktuell vorhergesagten Lüfterdrehzahlbedarfs.

11. Verfahren nach Anspruch 10, ferner umfassend:
als Reaktion auf das Durchführen (200) der vorliegenden Iteration zur Auswahl eines Lüfterdrehzahlbedarfs und zur Generierung eines Steuersignals Durchführen (300) einer nachfolgenden Iteration zur Generierung eines Lüfterdrehzahlbedarfs, umfassend:
Abrufen (310) des gespeicherten vorhergesagten Lüfterdrehzahlbedarfs; und
Bereitstellen (320) des gespeicherten vorhergesagten Lüfterdrehzahlbedarfs als einen der zuvor auferlegten Lüfterdrehzahlbedarfswerte.

12. Verfahren nach Anspruch 11, wobei
die nachfolgende Iteration zur Generierung eines Lüfterdrehzahlbedarfs beginnt, bevor die vorliegende Iteration zur Auswahl eines Lüfterdrehzahlbedarfs und zur Generierung eines Steuersignals endet.

13. Verfahren nach Anspruch 11, ferner umfassend:
als Reaktion auf das Durchführen (300) der nachfolgenden Iteration zur Generierung eines Lüfterdrehzahlbedarfs Durchführen (400) einer nachfolgenden Iteration zur Auswahl eines Lüfterdrehzahlbedarfs und zur Generierung eines Steuersignals.

14. Verfahren nach Anspruch 1, wobei
das Erfassen (110) der Daten zur vorherigen Kühlmitteltemperatur und der Daten zum vorherigen thermischen Einfluss sowie das Generieren (120) der Daten zur vorhergesagten Kühlmitteltemperatur und der Daten zum vorhergesagten thermischen Einfluss in der vorliegenden Iteration zur Generierung eines Lüfterdrehzahlbedarfs als ein vorliegender Prozess zur Generierung der Daten zur Kühlmitteltemperatur und zur Generierung der Daten zum thermischen Einfluss bezeichnet werden,
das Generieren (130) des aktuell vorhergesagten Lüfterdrehzahlbedarfs in der vorliegenden Iteration zur Generierung eines Lüfterdrehzahlbedarfs als ein vorliegender Prozess zur Generierung eines Lüfterdrehzahlbedarfs bezeichnet wird,
das Empfangen (210) des Echtzeit-Lüfterdrehzahlbedarfs sowie das Vergleichen (220) des aktuell vorhergesagten Lüfterdrehzahlbedarfs mit dem Echtzeit-Lüfterdrehzahlbedarf in der vorliegenden Iteration zur Auswahl eines Lüfterdrehzahlbedarfs und zur Generierung eines Steuersignals als ein vorliegender Echtzeit-Vergleichsprozess bezeichnet werden, und
das Bestimmen (230) des höchsten Lüfterdrehzahlbedarfs sowie das Generieren (240) des Steuersignals in der vorliegenden Iteration zur Auswahl eines Lüfterdrehzahlbedarfs und zur Generierung eines Steuersignals als ein vorliegender Steuersignal-Generierungsprozess bezeichnet werden.

15. System (500) zum Steuern der Fahrzeuglüfterdrehzahl zur Regulierung der Kühlmitteltemperatur, wobei das System (500) umfasst:
einen Prozessor (510); und
einen Sensor (520), der elektrisch mit dem Prozessor (510) verbunden ist,
wobei der Prozessor (510) dazu ausgelegt ist, Operationen durchzuführen, umfassend:
Durchführen (100) einer vorliegenden Iteration zur Generierung eines Lüfterdrehzahlbedarfs, umfassend:
Erfassen (110) von Daten zur vorherigen Kühlmitteltemperatur und von Daten zum vorherigen thermischen Einfluss über den Sensor (520), wobei die Daten zum vorherigen thermischen Einfluss den Daten zur vorherigen Kühlmitteltemperatur zugeordnet werden;
Generieren (120) von Daten zur vorhergesagten Kühlmitteltemperatur und von Daten zum vorhergesagten thermischen Einfluss basierend auf den Daten zur vorherigen Kühlmitteltemperatur und den Daten zum vorherigen thermischen Einfluss, wobei die Daten zum vorhergesagten thermischen Einfluss den Daten zur vorhergesagten Kühlmitteltemperatur zugeordnet werden; und
Generieren (130) eines aktuell vorhergesagten Lüfterdrehzahlbedarfs für eine Fahrzeuglüfterhardware basierend auf den Daten zur vorhergesagten Kühlmitteltemperatur, den Daten zum vorhergesagten thermischen Einfluss und zuvor auferlegten Lüfterdrehzahlbedarfswerten für die Fahrzeuglüfterhardware aus einer vorherigen Iteration zur Generierung eines Lüfterdrehzahlbedarfs oder einem initialen Lüfterdrehzahlbedarf für die Fahrzeuglüfterhardware; und
als Reaktion auf das Durchführen (100) der vorliegenden Iteration zur Generierung eines Lüfterdrehzahlbedarfs Durchführen (200) einer vorliegenden Iteration zur Auswahl eines Lüfterdrehzahlbedarfs und zur Generierung eines Steuersignals, umfassend:
Empfangen (210) eines Echtzeit-Lüfterdrehzahlbedarfs für die Fahrzeuglüfterhardware;
Vergleichen (220) des aktuell vorhergesagten Lüfterdrehzahlbedarfs mit dem Echtzeit-Lüfterdrehzahlbedarf;
Bestimmen (230) eines höchsten Lüfterdrehzahlbedarfs für die Fahrzeuglüfterhardware unter dem aktuell vorhergesagten Lüfterdrehzahlbedarf und dem Echtzeit-Lüfterdrehzahlbedarf; und Generieren (240) eines Steuersignals zur Steuerung der Fahrzeuglüfterdrehzahl der Fahrzeuglüfterhardware basierend auf dem höchsten Lüfterdrehzahlbedarf.

## Revendications

1. Procédé de commande de vitesse de ventilateur de véhicule pour réguler la température de liquide de refroidissement, le procédé comprenant :
la réalisation (100) d'une présente itération de génération de demande de vitesse de ventilateur comprenant :
l'acquisition (110) de données de température de liquide de refroidissement précédentes et de données d'impact thermique précédentes, dans lequel les données d'impact thermique précédentes sont associées aux données de température de liquide de refroidissement précédentes ;
la génération (120) de données de température de liquide de refroidissement prédites et de données d'impact thermique prédites à partir des données de température de liquide de refroidissement précédentes et des données d'impact thermique précédentes, dans lequel les données d'impact thermique prédites sont associées aux données de température de liquide de refroidissement prédites ; et
la génération (130) d'une demande de vitesse de ventilateur actuellement prédite pour un matériel informatique de ventilateur de véhicule à partir des données de température de liquide de refroidissement prédites, des données d'impact thermique prédites et de demandes de vitesse de ventilateur précédemment imposées pour le matériel informatique de ventilateur de véhicule provenant d'une précédente itération de génération de demande de vitesse de ventilateur ou d'une demande de vitesse de ventilateur initiale pour le matériel informatique de ventilateur de véhicule ; et
en réponse à la réalisation (100) de la présente itération de génération de demande de vitesse de ventilateur, la réalisation (200) d'une présente itération de sélection de demande de vitesse de ventilateur et de génération de signal de commande comprenant :
la réception (210) d'une demande de vitesse de ventilateur en temps réel pour le matériel informatique de ventilateur de véhicule ;
la comparaison (220) de la demande de vitesse de ventilateur actuellement prédite avec la demande de vitesse de ventilateur en temps réel ;
la détermination (230) d'une demande de vitesse de ventilateur la plus élevée pour le matériel informatique de ventilateur de véhicule parmi la demande de vitesse de ventilateur actuellement prédite et la demande de vitesse de ventilateur en temps réel ; et
la génération (240) d'un signal de commande pour commander la vitesse de ventilateur de véhicule du matériel informatique de ventilateur de véhicule à partir de la demande de vitesse de ventilateur la plus élevée.

2. Procédé selon la revendication 1, dans lequel
la réalisation (100) de la présente itération de génération de demande de vitesse de ventilateur comprend en outre :
la génération (121) des données de température de liquide de refroidissement prédites et des données d'impact thermique prédites en utilisant un modèle de prédiction de température de liquide de refroidissement et d'impact thermique.

3. Procédé selon la revendication 1, dans lequel
la réalisation (100) de la présente itération de génération de demande de vitesse de ventilateur comprend en outre :
la génération (122) d'un scénario d'impact thermique à partir des données d'impact thermique prédites ; et
la génération (131) de la demande de vitesse de ventilateur actuellement prédite à partir des données de température de liquide de refroidissement prédites, du scénario d'impact thermique et des demandes de vitesse de ventilateur précédemment imposées ou de la demande de vitesse de ventilateur initiale.

4. Procédé selon la revendication 3, dans lequel
la réalisation (100) de la présente itération de génération de demande de vitesse de ventilateur comprend en outre :
la génération (123) du scénario d'impact thermique en utilisant un modèle de stratégie de regroupement.

5. Procédé selon la revendication 1, dans lequel
la réalisation (100) de la présente itération de génération de demande de vitesse de ventilateur comprend en outre :
la génération (124) d'un scénario d'impact thermique à partir des données d'impact thermique précédentes ; et
la génération (125) des données de température de liquide de refroidissement prédites et des données d'impact thermique prédites à partir des données de température de liquide de refroidissement précédentes et du scénario d'impact thermique.

6. Procédé selon la revendication 5, dans lequel
la réalisation (100) de la présente itération de génération de demande de vitesse de ventilateur comprend en outre :
la génération (126) du scénario d'impact thermique en utilisant un modèle de stratégie de regroupement.

7. Procédé selon la revendication 1, dans lequel
la réalisation (100) de la présente itération de génération de demande de vitesse de ventilateur comprend en outre :
la génération (132) de la demande de vitesse de ventilateur actuellement prédite en utilisant un modèle d'étiquetage par apprentissage par renforcement.

8. Procédé selon la revendication 1, dans lequel
la présente itération de génération de demande de vitesse de ventilateur commence avant qu'une précédente itération de sélection de demande de vitesse de ventilateur et de génération de signal de commande ne se termine.

9. Procédé selon la revendication 1, dans lequel
la présente itération de génération de demande de vitesse de ventilateur commences lorsque ou après que la demande de vitesse de ventilateur initiale est reçue.

10. Procédé selon la revendication 1, dans lequel
la réalisation (100) de la présente itération de génération de demande de vitesse de ventilateur comprend en outre :
le stockage (140) de la demande de vitesse de ventilateur actuellement prédite.

11. Procédé selon la revendication 10 comprenant en outre :
en réponse à la réalisation (200) de la présente itération de sélection de demande de vitesse de ventilateur et de génération de signal de commande, la réalisation (300) d'une itération de génération de demande de vitesse de ventilateur subséquente comprenant :
la récupération (310) de la demande de vitesse de ventilateur prédite stockée ; et
la fourniture (320) de la demande de vitesse de ventilateur prédite stockée en tant que l'une des demandes de vitesse de ventilateur précédemment imposées.

12. Procédé selon la revendication 11, dans lequel
l'itération de génération de demande de vitesse de ventilateur subséquente commence avant que la présente itération de sélection de demande de vitesse de ventilateur et de génération de signal de commande ne se termine.

13. Procédé selon la revendication 11 comprenant en outre :
en réponse à la réalisation (300) de l'itération de génération de demande de vitesse de ventilateur subséquente, la réalisation (400) d'une itération de sélection de demande de vitesse de ventilateur et de génération de signal de commande subséquente.

14. Procédé selon la revendication 1, dans lequel
l'acquisition (110) de données de température de liquide de refroidissement précédentes et de données d'impact thermique précédentes, et la génération (120) de données de température de liquide de refroidissement prédites et de données d'impact thermique prédites dans la présente itération de génération de demande de vitesse de ventilateur sont appelées présent processus de génération de données de température de liquide de refroidissement et de données d'impact thermique,
la génération (130) de la demande de vitesse de ventilateur actuellement prédite dans la présente itération de génération de demande de vitesse de ventilateur est appelée présent processus de génération de demande de vitesse de ventilateur,
la réception (210) de la demande de vitesse de ventilateur en temps réel, et la comparaison (220) de la demande de vitesse de ventilateur actuellement prédite avec la demande de vitesse de ventilateur en temps réel dans la présente itération de sélection de demande de vitesse de ventilateur et de génération de signal de commande sont appelées présent processus comparatif en temps réel, et
la détermination (230) de la demande de vitesse de ventilateur la plus élevée, et la génération (240) du signal de commande dans la présente itération de sélection de demande de vitesse de ventilateur et de génération de signal de commande sont appelées présent processus de génération de signal de commande.

15. Système (500) de commande de vitesse de ventilateur de véhicule pour réguler la température de liquide de refroidissement, le système (500) comprenant :
un processeur (510) ; et
un capteur (520) couplé électriquement avec le processeur (510), dans lequel le processeur (510) est configuré pour réaliser des opérations comprenant :
la réalisation (100) d'une présente itération de génération de demande de vitesse de ventilateur comprenant :
l'acquisition (110) de données de température de liquide de refroidissement précédentes et de données d'impact thermique précédentes via le capteur (520), dans lequel les données d'impact thermique précédentes sont associées aux données de température de liquide de refroidissement précédentes ;
la génération (120) de données de température de liquide de refroidissement prédites et de données d'impact thermique prédites à partir des données de température de liquide de refroidissement précédentes et des données d'impact thermique précédentes, dans lequel les données d'impact thermique prédites sont associées aux données de température de liquide de refroidissement prédites ; et
la génération (130) d'une demande de vitesse de ventilateur actuellement prédite pour un matériel informatique de ventilateur de véhicule à partir des données de température de liquide de refroidissement prédites, des données d'impact thermique prédites et de demandes de vitesse de ventilateur précédemment imposées pour le matériel informatique de ventilateur de véhicule provenant d'une précédente itération de génération de demande de vitesse de ventilateur ou d'une demande de vitesse de ventilateur initiale pour le matériel informatique de ventilateur de véhicule ; et
en réponse à la réalisation (100) de la présente itération de génération de demande de vitesse de ventilateur, la réalisation (200) d'une présente itération de sélection de demande de vitesse de ventilateur et de génération de signal de commande comprenant :
la réception (210) d'une demande de vitesse de ventilateur en temps réel pour le matériel informatique de ventilateur de véhicule ;
la comparaison (220) de la demande de vitesse de ventilateur actuellement prédite avec la demande de vitesse de ventilateur en temps réel ;
la détermination (230) d'une demande de vitesse de ventilateur la plus élevée pour le matériel informatique de ventilateur de véhicule parmi la demande de vitesse de ventilateur actuellement prédite et la demande de vitesse de ventilateur en temps réel ; et
la génération (240) d'un signal de commande pour commander la vitesse de ventilateur de véhicule du matériel informatique de ventilateur de véhicule à partir de la demande de vitesse de ventilateur la plus élevée.
